# EUROPÄISCHE PATENTSCHRIFT

(11) **EP 0 878 649 B1**
(45) Veröffentlichungstag und Bekanntmachung des Hinweises auf die Patenterteilung: **09.10.2002**
(21) Anmeldenummer: 98105819.1
(22) Anmeldetag: 31.03.1998
(51) Int. Cl.: F16K 11/18, F16K 1/44

(54) **Doppelsitzventil**
Double seat valve
Soupape à siège double

(30) Priorität: 16.05.1997 DE 19720566
(43) Veröffentlichungstag der Anmeldung: 18.11.1998
(73) Patentinhaber: APV ROSISTA GMBH, 59425 Unna (DE)
(72) Erfinder: Bräckelmann, Wolfgang, 59425 Unna-Uelzen (DE); Fischer, Norbert, 59320 Ennigerloh (DE); Scholz, Klaus, 44149 Dortmund (DE)

(56) Entgegenhaltungen:
- EP-A- 0 039 319
- EP-A- 0 140 432
- EP-A- 0 834 689
- WO-A-98/41786
- DE-A- 2 751 732
- DE-A- 3 835 944
- DE-A- 19 652 215

## Beschreibung

Die Erfindung betrifft ein Doppelsitzventil, mit einem oberen Ventilschaft und einem unteren Ventilschaft in einem Ventilgehäuse mit übereinander angeordneten Rohrleitungsanschlüssen und einem zwischen den oberen Rohrleitungsanschlüssen und den unteren Rohrleitungsanschlüssen angeordneten Ventildichtsitz für die unabhängig voneinander betätigbaren und auf einem Balancedurchmesser in dem Ventilgehäuse verfahrbaren Ventilschäfte, wobei die mit endseitigen einander zugeordneten Ventildichtkörpern in Schließstellung befindlichen Ventilschäfte einen nach unten offenen Leckageraum bilden und die Ventildichtkörper jeweils von zumindest einer Dichtung umgeben sind, die auf dem Balancedurchmesser gegen den Ventildichtsitz anliegt, und einer der Ventildichtkörper desweiteren eine Mitteldichtung aufweist, gegen die der andere Ventildichtkörper bei in Offenstellung gegeneinander gefahrenen Ventilschäften anliegt. - Balancedurchmesser meint im Rahmen der Erfindung, daß die Ventilschäfte und die Ventildichtkörper auf jeweils identischem Durchmesser oder nahezu identischem Durchmesser unter Einhaltung eines Passungsspaltes in dem Ventilgehäuse geführt sind.

Es ist ein derartiges Doppelsitzventil bekannt (vgl. EP 0 140 432), bei dem die Mitteldichtung auf dem tellerartigen Ventildichtkörper des unteren Ventilschaftes angeordnet ist und einen deutlich kleineren Durchmesser als den Balancedurchmesser beschreibt, auf dem sich die den oberen Ventildichtkörper und unteren Ventildichtkörper umgebenden Dichtungen befinden. Eine derartige Anordnung der Mitteldichtung ist insbesondere dann problematisch, wenn sich die beiden Ventilschäfte bzw. ihre Ventildichtkörper in Offenstellung befinden und dadurch die oberen Rohrleitungsanschlüsse mit den unteren Rohrleitungsanschlüssen über den geöffneten Ventildichtsitz in Verbindung stehen. Denn bei in Offenstellung befindlichen Ventilschäften und gegeneinander gefahrenen Ventildichtkörpern muß der Leckageraum gegenüber den kommunizierenden Rohrleitungsanschlüssen und dem darin geförderten Medium abgeschlossen sein. Wenn jedoch in dieser Funktionsstellung ein sich über das Medium fortpflanzender Druckschlag auftritt, dann besteht die Gefahr, daß der obere Ventilschaft und der untere Ventilschaft bzw. ihre Ventildichtkörper infolge der nicht ausbalancierten Mitteldichtung auseinander gedrückt werden und Medium über den Leckageraum nach unten abfließt. - Ein anderes Problem ist darin zu sehen, daß das bekannte Doppelsitzventil weitgehend zerlegt werden muß, wenn ein Dichtungswechsel erforderlich wird. Denn dann lassen sich zwar die Ventilschäfte mit den Ventildichtkörpern aus dem Ventilgehäuse herausführen, jedoch läßt sich die Mitteldichtung aufgrund ihres sehr viel geringeren Durchmessers als der Balancedurchmesser nicht über den unteren oder oberen Ventilschaft bzw. dessen Ventildichtkörper abziehen und eine neue Mitteldichtung aufziehen, weil die verwendeten Dichtungen die dafür erforderliche Elastizität nicht aufweisen. Außerdem ist die Mitteldichtung ohne Demontage der betreffenden Ventildichtkörper nicht zugänglich. - Hier will die Erfindung Abhilfe schaffen.

Der Erfindung liegt die Aufgabe zugrunde, ein Doppelsitzventil der eingangs beschriebenen Ausführungsform zu schaffen, das sich in Offenstellung durch Druckschlagfestigkeit und durch einen montagefreundlichen Dichtungswechsel auszeichnet.

Diese Aufgabe löst die Erfindung bei einem gattungsgemäßen Doppelsitzventil dadurch, daß die Mitteldichtung - wie die beiden anderen Dichtungen - ebenfalls auf dem Balancedurchmesser liegt, und daß der andere Ventildichtkörper einen Dichtkragen aufweist, gegen den die Mitteldichtung bei in Offenstellung befindlichen Ventilschäften mit Dichtwirkung anliegt. - Die Erfindung geht von der Erkenntnis aus, daß sich auch die Mitteldichtung auf dem Balancedurchmesser anordnen läßt, wenn dafür gesorgt wird, daß eine einwandfreie Abdichtung der Ventildichtkörper gegeneinander gewährleistet ist, wenn sich die Ventilschäfte in Offenstellung befinden. Das gelingt im Rahmen der Erfindung über den Dichtkragen an jenem Ventildichtkörper, welcher dem Ventildichtkörper mit der Mitteldichtung auf dem Balancedurchmesser zugeordnet ist. Infolge der Tatsache, daß sich die Mitteldichtung auf dem Balancedurchmesser befindet, besteht nicht länger die Gefahr, daß die Ventildichtkörper infolge eines von dem die Rohrleistungsanschlüsse jeweils durchströmenden Medium übertragenen Druckschlages geöffnet werden, der im übrigen bis zu 50 Bar betragen kann. Tatsächlich ist stets einwandfreie Dichtwirkung zwischen den Ventildichtkörpern und ihren Ventilschäften in deren Offenstellung gewährleistet, so daß kein Medium in den Leckageraum eindringen und unkontrolliert abfließen kann.

Von besonderer Bedeutung ist ferner die Tatsache, daß sich sämtliche Dichtungen auf dem gleichen Durchmesser, nämlich Balancedurchmesser befinden. Das ist bei dem erfindungsgemäßen Doppelsitzventil gleichsam der Außendurchmesser der Ventildichtkörper, so daß auch hinsichtlich der Mitteldichtung unschwer ein Dichtungswechsel möglich ist, ohne daß das Doppelsitzventil zerlegt werden muß. Vielmehr genügt dazu lediglich die Herausnahme der Ventilschäfte mit ihren Ventildichtkörpern aus dem Ventilgehäuse. Endlich lassen sich relativ große Dichtspalte zwischen den Ventilschäften bzw. ihren Ventildichtkörpern und dem Ventildichtsitz unter Berücksichtigung der auf dem Außenumfang der Ventildichtkörper angeordneten Dichtungen verwirklichen, so daß insoweit optimale Zugänglichkeit für ein Reinigungsmittel gewährleistet ist.

Weitere erfindungswesentliche Maßnahmen sind im folgenden aufgeführt. So sieht die Erfindung vor, daß der Ventildichtsitz eine der Mitteldichtung zugeordnete Einformung in seiner Berührungsfläche aufweist und die Einformung bei in Schließstellung befindlichen Ventilschäften mit dem Leckageraum in Verbindung steht. Auf diese Weise läßt sich also eine einwandfreie Reinigung nicht nur des Leckageraumes mittels Reinigungsflüssigkeit erreichen, sondern auch der Mitteldichtung und der zugeordneten Einformung in den Ventildichtsitz bis zu den beiden äußeren Dichtungen. Die Dichtungen sind vorzugsweise als Ringdichtungen mit außenseitig einem abgerundeten Berührungsprofil und innenseitig einer beidseitigen Verankerungschulter ausgebildet. Dadurch wird einerseits eine einwandfreie Abdichtung erreicht, wenn sich die Ventilschäfte bzw. ihre Ventildichtkörper in Schließstellung befinden, wird andererseits eine Verankerung der Ringdichtungen in den Ventildichtkörpern erreicht, die eine sichere Befestigung der Ringdichtungen ebenso wie deren Lösen im Zuge eines Dichtungswechsels gewährleistet. Zweckmäßigerweise ist die Mitteldichtung auf dem Ventildichtkörper des oberen Ventilschaftes angeordnet, wenngleich auch die Umkehrung denkbar ist. - Weiter sieht die Erfindung vor, daß innenseitig an das Ventilgehäuse ein Einspritzrohr für ein Reinigungsmedium angeschlossen ist und das Einspritzrohr in den unten offenen unteren Ventilschaft vorkragt und gegen den als Teller ausgebildeten oberen Ventildichtkörper gerichtet ist und folglich Reinigungsmittel in einem gebündelten Strahl gegen den oberen Ventildichtkörper führen kann, welches aufgrund der tellerartigen Ausbildung des oberen Ventildichtkörpers nach außen in den Bereich des Ventildichtsitzes gefächert wird. Durch ein exzentrisches Auftreffen des Reinigungsstrahls ergibt sich eine Rotationsströmung im Ventildichtsitz. Das lösbar im Ventilgehäuse angebrachte Einspritzrohr ist in montagetechnischer Hinsicht vorteilhaft, da keine Verbindung zu dem Ventildichtsitz besteht und folglich das Einspritzrohr unschwer ausgebaut und auch ausgetauscht werden kann.

Im folgenden wird die Erfindung anhand einer lediglich ein Ausführungsbeispiel darstellenden Zeichnung näher erläutert. Es zeigen:

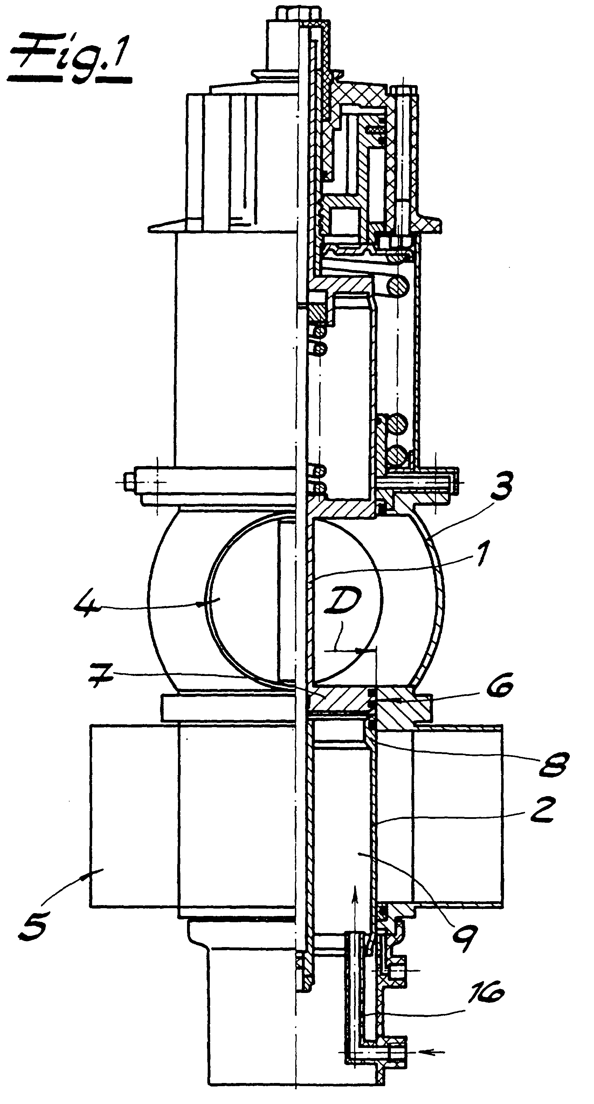

- **Fig. 1**: ein erfindungsgemäßes Doppelsitzventil in schematischer und teilweise geschnittener Ansicht,
- **Fig. 2**: einen vergrößerten Ausschnitt aus dem Gegenstand nach Fig. 1 im Bereich des Ventildichtsitzes bei in Schließstellung befindlichen Ventilschäften,
- **Fig. 3**: den Gegenstand nach Fig. 2 bei nach oben gefahrenem oberen Ventilschaft zur Reinigung des oberen Ventilbereiches,

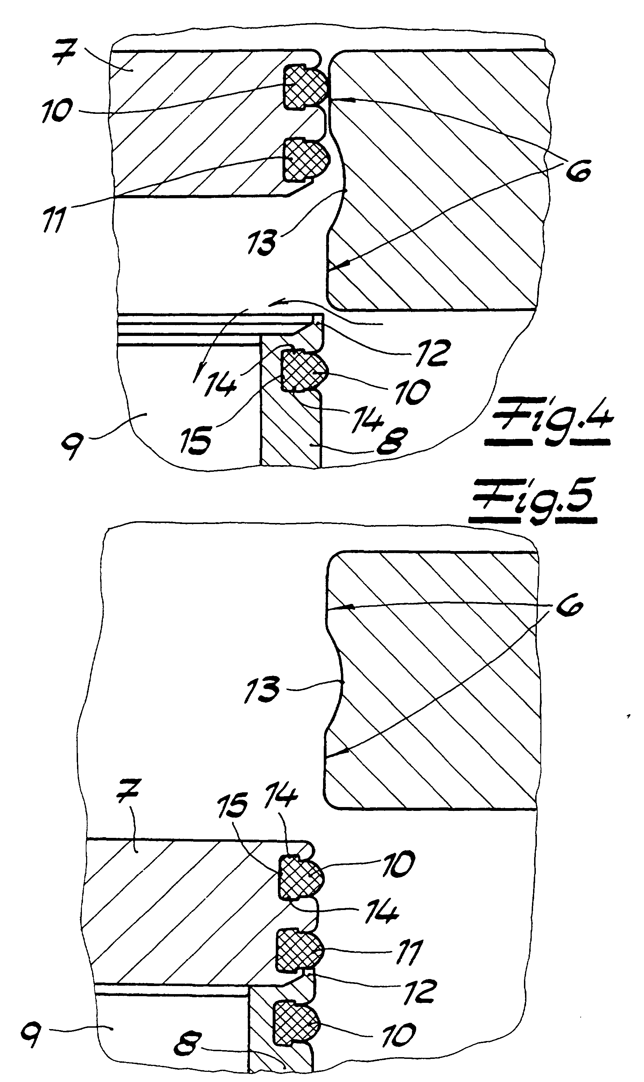

- **Fig. 4**: einen Ausschnitt aus dem Gegenstand nach Fig. 2 bei nach unten gefahrenem unteren Ventilschaft zur Reinigung des unteren Ventilbereiches und
- **Fig. 5**: den Gegenstand nach Fig. 2 bei in Offenstellung befindlichen Ventilschäften und dadurch geschlossenem Leckageraum.

In den Figuren ist ein Doppelsitzventil dargestellt, das in seinem grundsätzlichen Aufbau einen oberen Ventilschaft 1 und einen unteren Ventilschaft 2 in einem Ventilgehäuse 3 mit übereinander angeordneten Rohrleitungsanschlüssen 4, 5 und einem zwischen den oberen Rohrleitungsanschlüssen 4 und den unteren Rohrleitungsanschlüssen 5 angeordneten Ventildichtsitz 6 für die unabhängig voneinander betätigbaren und auf einem Balancedurchmesser D in dem Ventilgehäuse 3 verfahrbaren Ventilschäfte 1, 2 aufweist. Die mit endseitig einander zugeordneten Ventildichtkörpern 7, 8 befindlichen Ventilschäfte 1, 2 bilden einen nach unten offenen Leckageraum 9. Die Ventildichtkörper 7, 8 sind jeweils von zumindest einer Dichtung 10 umgeben, die auf dem Balancedurchmesser D gegen den Ventildichtsitz 6 anliegen. Einer der Ventildichtkörper 7 weist eine Mitteldichtung 11 auf, gegen die der andere Ventildichtkörper 8 bei in Offenstellung gegeneinander gefahrenen Ventilschäften 1, 2 anliegt. Diese Mitteldichtung 11 liegt wie die beiden anderen Dichtungen 10 ebenfalls auf dem Balancedurchmesser D. Der andere Ventildichtkörper 8 weist einen Dichtkragen 12 auf, gegen den die Mitteldichtung 11 bei in Offenstellung befindlichen Ventilschäften 1, 2 mit Dichtwirkung anliegt, so daß dann der Leckageraum 9 gegenüber dem die kommunizierenden Rohrleitungsanschlüsse 4, 5 durchfließendem Medium geschlossen ist. Der Ventildichtsitz 6 besitzt eine der Mitteldichtung 11 zugeordnete Einformung 13 in seiner Berührungsfläche. Die Einformung 13 steht bei in Schließstellung befindlichen Ventilschäften 1, 2 mit dem Leckageraum 9 in Verbindung, wird also bei der Reinigung des Leckageraumes 9 ebenso wie die Mitteldichtung 11 gereinigt. Die Dichtungen 10, 11 sind als Ringdichtungen mit außenseitig einem abgerundetem Berührungsprofil und innenseitig einer beidseitigen Verankerungsschulter 14 ausgebildet, welche in korrespondierende Ringnuten 15 am Außenumfang der Ventildichtkörper 7, 8 eingesetzt ist. Die Mitteldichtung 11 ist nach dem Ausführungsbeispiel auf dem Ventildichtkörper 7 des oberen Ventilschaftes 1 angeordnet, weil dieser als tellerartiger Ventildichtkörper ausgebildet ist.

Ferner ist innenseitig an das Ventilgehäuse 3 ein Einspritzrohr 16 für ein Reinigungsmedium austauschbar angeschlossen. Das Einspritzrohr 16 kragt in den unten offenen unteren Ventilschaft 2 vor und ist gegen den tellerförmigen oberen Ventildichtkörper 7 gerichtet. Bei exzentrischem Auftreffen des Reinigungsstrahls ergibt sich eine Rotationsströmung im Ventildichtsitz 6 zwischen den beiden Dichtungen 10 und 11.

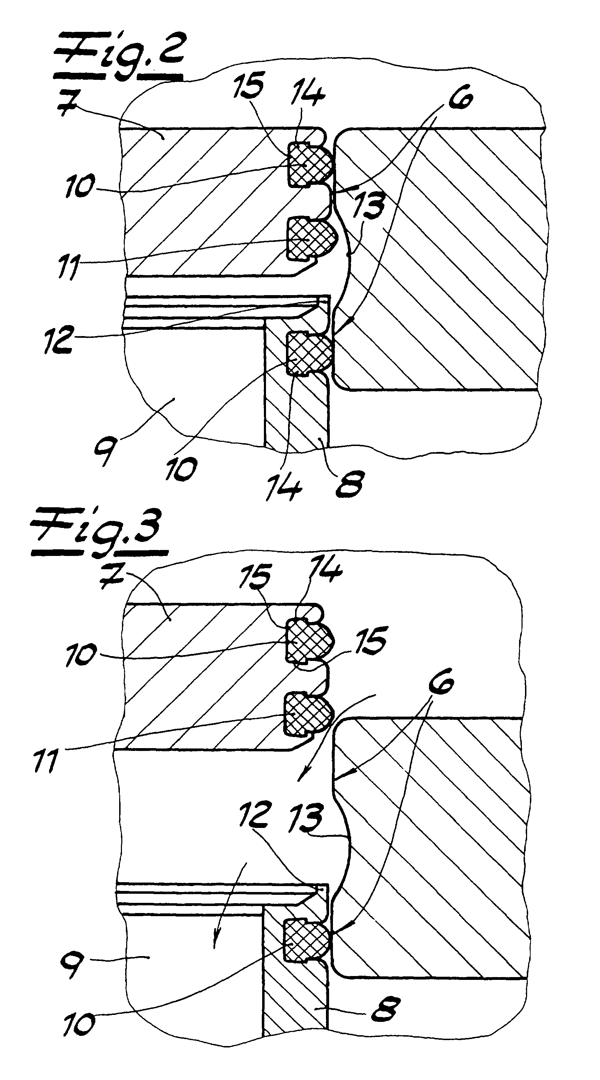

Bei in Schließstellung befindlichen Ventilschäften 1, 2 nach Fig. 2. sind die Medien in den oberen Rohrleitungsanschlüssen 4 und den unteren Rohrleitungsanschlüssen 5 voneinander getrennt, kann es sich insoweit also um unterschiedliche Medien handeln. Bei in Offenstellung befindlichen Ventilschäften 1, 2 nach Fig. 5 kommunizieren sämtliche Rohrleitungsanschlüsse 4, 5, die folglich von lediglich einem einzigen Medium durchströmt werden, während der Leckageraum 9 dagegen abgeschlossen ist.

Bei der Reinigung des oberen Ventilbereiches nach Fig. 3 können die oberen Rohrleitungsanschlüsse 4 von einem Reinigungsmittel durchströmt werden, welches über den Leckageraum 9 abgeführt wird, während die unteren Rohrleitungsanschlüsse 5 von einem Medium durchströmt sein können, weil die unteren Rohrleitungsanschlüsse 5 gegen den Leckageraum 9 und die oberen Rohrleitungsanschlüsse 4 abgedichtet sind. Die Reinigung des unteren Ventilbereiches erfolgt in umgekehrter Weise. In diesem Fall ist der untere Ventilschaft 2 nach unten gefahren und hat sein Ventildichtkörper 8 den Ventildichtsitz 6 verlassen, so daß die unteren Rohrleitungsanschlüsse 5 von Reinigungsflüssigkeit durchströmt werden, die über den Leckageraum 9 drucklos nach unten abfließt, während die oberen Rohrleitungsanschlüsse 4 von einem Medium durchströmt sein können, weil diese Rohrleitungsanschlüsse 4 gegenüber dem Leckageraum 9 und den unteren Rohrleitungsanschlüssen 5 durch den oberen Ventildichtkörper 7 abgedichtet sind.

## Patentansprüche

1. Doppelsitzventil, mit einem oberen Ventilschaft (1) und einem unteren Ventilschaft (2) in einem Ventilgehäuse (3) mit übereinander angeordneten Rohrleitungsanschlüssen (4, 5) und einem zwischen den oberen Rohrleitungsanschlüssen und den unteren Rohrleitungsanschlüssen angeordneten Ventildichtsitz (6) für die unabhängig voneinander betätigbaren und auf einem Balancedurchmesser (D) in dem Ventilgehäuse verfahrbaren Ventilschäfte (1, 2), wobei die mit endseitigen einander zugeordneten Ventildichtkörpern (7, 8) in Schließstellung befindlichen Ventilschäfte einen nach unten offenen Leckageraum (9) bilden und die Ventildichtkörper jeweils von zumindest einer Dichtung (10) umgeben sind, die auf dem Balancedurchmesser gegen den Ventildichtsitz anliegt, und einer der Ventildichtkörper desweiteren eine Mitteldichtung (11) aufweist, gegen die der andere Ventildichtkörper bei in Offenstellung gegeneinander gefahrenen Ventilschäften anliegt, **dadurch gekennzeichnet, daß** die Mitteldichtung (11) ebenfalls auf dem Balancedurchmesser (D) liegt, und daß der andere Ventildichtkörper (8) einen Dichtkragen (12) aufweist, gegen den die Mitteldichtung (11) bei in Offenstellung befindlichen Ventilschäften (1, 2) anliegt.

2. Doppelsitzventil nach Anspruch 1, **dadurch gekennzeichnet, daß** der Ventildichtsitz (6) eine der Mitteldichtung (11) zugeordnete Einformung (13) in der Berührungsfläche aufweist und die Einformung (13) bei in Schließstellung befindlichen Ventilschäften (1, 2) mit dem Leckageraum (9) in Verbindung steht.

3. Doppelsitzventil nach Anspruch 1 oder 2, **dadurch gekennzeichnet, daß** die Dichtungen (10, 11) als Ringdichtungen mit außenseitig einem abgerundeten Berührungsprofil und innenseitig einer beidseitigen Verankerungsschulter (14) ausgebildet sind.

4. Doppelsitzventil nach einem der Ansprüche 1 bis 3, **dadurch gekennzeichnet, daß** die Mitteldichtung (11) auf dem Ventildichtkörper (7) des oberen Ventilschaftes (1) angeordnet ist.

5. Doppelsitzventil nach einem der Ansprüche 1 bis 4, **dadurch gekennzeichnet, daß** innenseitig an das Ventilgehäuse (3) ein Einspritzrohr (16) für ein Reinigungsmedium angeschlossen ist und das Einspritzrohr (16) in den unteren Ventilschaft (2) vorkragt und gegen den als Teller ausgebildeten oberen Ventildichtkörper (7) gerichtet ist.

6. Doppelsitzventil nach einem der Ansprüche 1 bis 5, **dadurch gekennzeichnet, daß** sich bei exzentrischem Auftreffen des aus dem Einspritzrohr (16) austretenden Reinigungsstrahls eine Rotationsströmung im Ventildichtsitz (6) zwischen den beiden Dichtungen (10, 11) ergibt.

## Claims

1. Double-seated valve, having an upper valve stem (1) and a lower valve stem (2) in a valve housing (3) provided with conduit connections (4, 5), which are disposed one above the other, and a valve sealing seat (6), which is disposed between the upper conduit connections and the lower conduit connections, for the independently actuatable valve stems (1, 2), which are displaceable in the valve housing on an even diameter (D), the valve stems, which are situated in the closed position with terminal valve sealing bodies (7, 8) associated with each other, forming a downwardly open leakage chamber (9), and the valve sealing bodies each being surrounded by at least one seal (10), which abuts against the valve sealing seat on the even diameter, and one of the valve sealing bodies moreover having a central seal (11), against which the other valve sealing body abuts when the valve stems are driven towards each other in the open position, **characterised in that** the central seal (11) also lies on the even diameter (D), and **in that** the other valve sealing body (8) includes a sealing collar (12), against which the central seal (11) abuts when the valve stems (1, 2) are in the open position.

2. Double-seated valve according to claim 1, **characterised in that** the valve sealing seat (6) includes, in the contact area, a moulded portion (13) associated with the central seal (11), and the moulded portion (13) communicates with the leakage chamber (9) when the valve stems (1, 2) are in the closed position.

3. Double-seated valve according to claim 1 or 2, **characterised in that** the seals (10, 11) are in the form of annular seals with a rounded contact profile on the outside and a bilateral retaining shoulder (14) on the inside.

4. Double-seated valve according to one of claims 1 to 3, **characterised in that** the central seal (11) is disposed on the valve sealing body (7) of the upper valve stem (1).

5. Double-seated valve according to one of claims 1 to 4, **characterised in that** an injection pipe (16) for the injection of a cleaning medium communicates with the valve housing (3) on the inside, and the injection pipe (16) protrudes into the lower valve stem (2) and is orientated towards the upper valve sealing body (7), which is in the form of a plate.

6. Double-seated valve according to one of claims 1 to 5, **characterised in that**, in the event of an eccentric encountering of the cleaning jet emerging from the injection pipe (16), a rotational flow is produced in the valve sealing seat (6) between the two seals (10, 11).

## Revendications

1. Soupape à siège double comprenant une tige de soupape supérieure (1) et une tige de soupape inférieure (2) présentes dans une cage de soupape (3) comprenant des raccords de conduites tubulaires (4, 5) superposés et un siège étanche de soupape (6), placé entre les raccords de conduites tubulaires supérieurs et les raccords de conduites tubulaires inférieurs, destiné aux tiges de soupape (1, 2), qui sont actionnables indépendamment les unes des autres et déplaçables, sur un diamètre d'équilibre (D), dans la cage de soupape, les tiges de soupape, pourvues de corps d'étanchéité (7, 8) terminaux, associés les uns aux autres, qui se trouvent en position de fermeture, formant un espace pour fuites (9) ouvert en direction du bas et les corps d'étanchéité étant chacun entourés d'au moins un joint (10) qui, sur le diamètre d'équilibre, reposent contre le siège étanche de soupape et l'un des corps d'étanchéité présentant également un joint central (11) contre lequel repose l'autre corps d'étanchéité lorsque les tiges de soupape, en position d'ouverture, sont déplacées l'une vers l'autre, **caractérisée en ce que** le joint central (11) repose également sur le diamètre d'équilibre (D) et **en ce que** l'autre corps d'étanchéité (8) présente un collet d'étanchéité (12) contre lequel repose le joint central (11) lorsque les tiges de soupape (1, 2) se trouvent en position d'ouverture.

2. Soupape à siège double selon la revendication 1, **caractérisée en ce que** le siège étanche de soupape (6) présente, dans la surface de contact, un renfoncement (13) associé au joint central (11) et **en ce que** le renfoncement (13), lorsque les tiges de soupape (1, 2) se trouvent en position de fermeture, communique avec l'espace pour fuites (9).

3. Soupape à siège double selon la revendication 1 ou 2, **caractérisée en ce que** les joints (10, 11) sont conformés en joints annulaires présentant, sur la face externe, un profil de contact arrondi et, sur la face interne, un épaulement d'ancrage (14) présent de part et d'autre.

4. Soupape à siège double selon l'une des revendications 1 à 3, **caractérisée en ce que** le joint central (11) est disposé sur le corps d'étanchéité (7) de la tige de soupape supérieure (1).

5. Soupape à siège double selon l'une des revendications 1 à 4, **caractérisée en ce que**, sur la face intérieure de la cage de soupape (3) est raccordé un tuyau d'injection (16) pour liquide de nettoyage et **en ce que** le tuyau d'injection (16) fait ressaut dans la tige de soupape inférieure (2) et est orienté vers le corps d'étanchéité (7) supérieur qui est conformé en disque.

6. Soupape à siège double selon l'une des revendications 1 à 5, **caractérisée en ce que**, lorsque le jet de nettoyage qui sort du tuyau d'injection (16) a un impact excentrique, un courant rotatif se forme dans le siège étanche de soupape (6), entre les deux joints (10, 11).
